Europäisches Patentamt

European Patent Office

Office européen des brevets

(19)

(11) Numéro de publication : **0 319 358 B1**

(12)

# FASCICULE DE BREVET EUROPEEN

(45) Date de publication du fascicule du brevet :
19.06.91 Bulletin 91/25

(51) Int. Cl.⁵ : **F16D 65/56**

(21) Numéro de dépôt : 88402837.4

(22) Date de dépôt : 14.11.88

(54) Frein à tambour à réglage automatique.

(30) Priorité : 01.12.87 FR 8716617

(43) Date de publication de la demande :
07.06.89 Bulletin 89/23

(45) Mention de la délivrance du brevet :
19.06.91 Bulletin 91/25

(84) Etats contractants désignés :
DE ES FR GB IT

(56) Documents cités :
EP-A- 0 061 961
WO-A-86/01866
FR-A- 2 507 271
US-A- 4 222 467

(73) Titulaire : BENDIX EUROPE Services
Techniques S.A.
126 rue de Stalingrad
F-93700 Drancy (FR)

(72) Inventeur : Michoux, Eric
17, rue du Docteur Bring
F-94350 Villiers sur Marne (FR)

(74) Mandataire : Lejet, Christian
Bendix Europe Service Techniques Service
Brevets 126 rue de Stalingrad
F-93700 Drancy (FR)

EP 0 319 358 B1

## Description

L'invention concerne un frein à tambour équipé d'un dispositif de réglage automatique prenant en compte l'usure des éléments de friction du frein, afin que la course du moteur de frein reste pratiquement inchangée malgré cette usure. Un tel frein peut être utilisé indifféremment sur un véhicule de tourisme ou sur un poids lourd.

De façon plus précise, l'invention concerne un frein à tambour tel que celui qui est décrit dans le document US-A-4 222 467. Ce frein comporte une plaque support sur laquelle sont montés coulissants deux segments de frein comprenant des garnitures de friction. Ces garnitures sont susceptibles d'être amenées en contact avec un tambour tournant par un moteur de frein interposé entre deux extrémités adjacentes des segments. Une entretoise de longueur variable est interposée entre les segments, à proximité du moteur de frein, pour définir une distance d'écartement minimale entre les extrémités des segments. Un ressort applique les segments contre l'entretoise lorsque le moteur de frein n'est pas actionné.

Dans ce frein à tambour, le dispositif de réglage automatique commande un allongement de l'entretoise. A cet effet, l'entretoise comprend un ensemble vis-écrou dont la vis est solidaire d'une roue dentée. Lorsqu'un actionnement du moteur de frein conduit à écarter les extrémités des segments d'une valeur supérieure à un jeu fonctionnel prédéterminé, un cliquet engréné sur la roue dentée commande la rotation de cette dernière dans le sens correspondant à l'allongement de l'entretoise.

Dans les freins à tambour équipés d'un dispositif de réglage automatique et en l'absence de disposition particulière, un réglage intervient dès que les extrémités des segments adjacentes au moteur de frein s'écartent d'une valeur supérieure au jeu fonctionnel prédéterminé, quelles que soient les conditions d'actionnement du frein.

Cependant, un freinage puissant entraîne des déformations mécaniques des segments et du tambour, qui ont pour conséquence de faire fonctionner le dispositif de réglage automatique de façon intempestive. Il en résulte un surréglage conduisant à un couple résiduel provoquant un échauffement du frein et une usure prématurée des éléments de friction.

Dans le document EP-A-O 061 961, une solution à ce problème a été proposée, dans le cas d'un frein à tambour dans lequel le dispositif de réglage automatique comprend un levier de réglage monté pivotant sur l'un des segments et dont l'extrémité porte un secteur denté coopérant avec un cliquet monté sur le même segment. Le réglage est assuré par un pivotement du levier de réglage commandé par un doigt formé sur l'entretoise. Dans ce document, la neutralisation du réglage sous pression est obtenue en faisant agir le moteur de frein sur ce levier de réglage, de telle sorte que son pivotement ne peut plus intervenir lorsque la pression de freinage devient excessive.

Si la solution au problème du réglage intempestif des freins à tambour en cas de freinage brutal décrite dans le document EP-A-O 061 961 est satisfaisante, elle ne s'applique qu'à des freins dans lesquels le dispositif de réglage automatique comprend un levier de réglage et un cliquet montés pivotants sur l'un des segments. En particulier, cette solution ne peut pas être transposée aux freins à tambour dans lesquels le dispositif de réglage automatique commande directement un allongement de l'entretoise, comme l'illustre notamment le document US-A-4 222 467.

On connaît d'autre part, du document WO-A-86/01866 un dispositif de réajustement automatique pour un frein à tambour, qui possède un élément de blocage mobile qui travaille en coopération avec un élément de ressort sensible à la chaleur et, en fonction de la valeur d'une force d'actionnement du frein et/ou d'une température prédéterminée, empêche le pivotement d'un levier de réajustement et ainsi un changement de la longueur de l'entretoise. Le jeu occasionné par le mouvement d'au moins une partie de l'élément de blocage est réduit lors d'une élévation de température, par modification de la raideur et/ou de la forme de l'élément de ressort en fonction de la température, et, lorsqu'une température prédéterminée est atteinte, ce jeu est complètement compensé.

L'invention a précisément pour objet un frein à tambour équipé d'un dispositif de réglage automatique commandant directement un allongement de l'entretoise, ce frein comprenant des moyens permettant de neutraliser le dispositif de réglage automatique lors d'un freinage brutal, c'est-à-dire lorsque la pression appliquée sur les segments par le moteur de frein excède une valeur limite prédéterminée.

Conformément à l'invention, ce résultat est obtenu grâce à un frein à tambour à réglage automatique, comportant une plaque support sur laquelle sont montés coulissants deux segments de frein comprenant des éléments de friction susceptibles d'être amenés en contact avec un tambour tournant par un moteur de frein interposé entre deux extrémités adjacentes des segments, une entretoise de longueur variable interposée entre les segments à proximité du moteur de frein, des moyens de réglage automatique commandant un allongement de l'entretoise lorsqu'un actionnement du moteur de frein écarte lesdites extrémités des segments d'une valeur supérieure à un jeu fonctionnel prédéterminé, des moyens de neutralisation des moyens de réglage automatique, et des premiers moyens élastiques tendant à appliquer les segments contre l'entretoise, un premier des segments portant par un axe de pivotement un levier sur lequel est normalement en appui le moteur de frein, caractérisé par le fait que l'entretoise est normalement en appui sur le levier sous l'action des premiers moyens élastiques, des seconds moyens élastiques prenant appui sur le premier segment pour exercer sur le levier une force tendant à maintenir ce dernier en butée contre le premier segment, le moment de cette force par rapport à l'axe de pivotement du levier étant opposé au moment de la force exercée sur le levier par le moteur de frein, et déterminant une valeur limite de ce dernier moment, au-delà de laquelle un actionnement du moteur de frein provoque un pivotement du levier vers l'autre segment, neutralisant les moyens de réglage automatique.

Dans le frein à tambour perfectionné ainsi défini, le moteur de frein et l'entretoise sont en appui sur l'un des segments par l'intermédiaire d'un levier monté pivotant sur ce segment. Le levier est normalement immobilisé sur le segment qui le porte par un ressort. Lorsque le moment de la force exercée par le moteur de frein sur le levier par rapport à son axe de pivotement excède le moment exercé en sens inverse par le ressort, le levier pivote sur le segment. Le levier est alors maintenu en appui sur l'entretoise, de telle sorte qu'aucune augmentation de la longueur de cette dernière n'intervient.

De préférence, l'axe de pivotement du levier sur le premier segment est situé dans un plan contenant l'axe du moteur de frein, ce dernier étant en appui sur une protubérance formée sur le levier et située de l'autre côté dudit plan, par rapport à l'entretoise.

Selon un premier mode de réalisation de l'invention, le moteur de frein et les seconds moyens élastiques sont en appui sur les extrémités opposées du levier, ce dernier étant articulé sur le premier segment à proximité du moteur de frein.

Selon un autre mode de réalisation de l'invention, le levier pivotant est un levier de frein à main articulé sur le premier segment à proximité du moteur de frein, les seconds moyens élastiques étant interposés entre l'entretoise et le premier segment pour maintenir en permanence l'entretoise en appui sur le levier de frein à main.

Deux modes de réalisation de l'invention vont maintenant être décrits, à titre d'exemples nullement limitatifs, en se référant au dessins annexés dans lesquels :

– la figure 1 est une vue en plan sur laquelle les moitiés gauche et droite illustrent deux modes de réalisation différents d'un frein à tambour conforme à l'invention ;

– les figures 2a et 2b sont des vues en plan représentant à plus grande échelle l'extrémité supérieure du segment du frein apparaissant sur la gauche de la figure 1, selon un premier mode de réalisation de l'invention, les différents organes du frein étant représentés respectivement dans la position qu'ils occupent lors d'un freinage normal sur la figure 2a et dans la position qu'ils occupent lors d'un freinage puissant sur la figure 2b ;

– la figure 3 est une vue en coupe selon la ligne III-III de la figure 1, dans le cas du mode de réalisation illustré sur les figures 2a et 2B ;

– les figures 4a et 4b sont des vues en plan et à plus grande échelle comparables aux figures 2a et 2b et représentant les différents organes du frein selon un deuxième mode de réalisation de l'invention, respectivement dans le cas d'un freinage normal et dans le cas d'un freinage puissant ; et

– la figure 5 est une vue en coupe comparable à la figure 3, dans le cas du mode de réalisation des figures 4a et 4b.

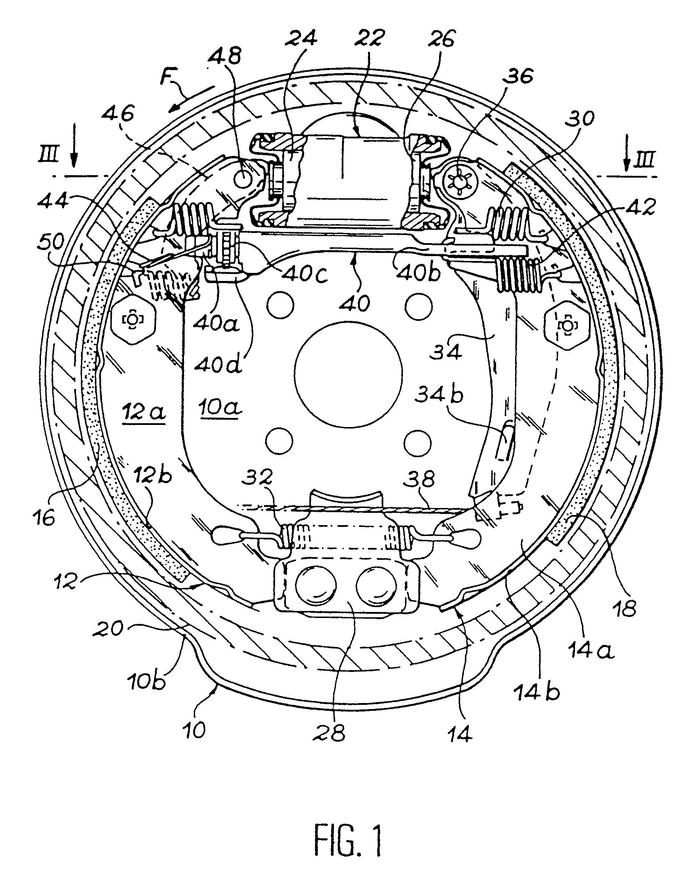

Le frein à tambour représenté sur la figure 1 comporte une plaque support 10 constituée d'un disque 10a approximativement plan, prolongé à sa périphérie par une couronne circulaire 10b. Cette plaque 10 est prévue pour être assujettie à une partie fixe du véhicule, telle qu'une bride d'essieu.

Deux segments de frein 12 et 14 sont supportés de façon coulissante par le disque 10a de la plaque support, grâce à des mécanismes habituels (non représentés). De façon bien connue, chacun des segments 12 et 14 comprend une âme 12a, 14a approximativement plane, sur laquelle est fixée une jante 12b, 14b en forme d'arc de cercle supportant sur sa face extérieure une garniture de friction 16 et 18 respectivement.

Les segments 12 et 14 sont placés sur la plaque support 10 de telle sorte que les enveloppes extérieures des garnitures 16 et 18 soient situées sur un même cercle dont l'axe est confondu avec l'axe de la plaque support 10. Ainsi, les garnitures 16 et 18 peuvent venir en contact avec la surface intérieure d'un tambour de frein 20 coiffant les deux segments et représenté en traits mixtes sur la figure 1. Le tambour 20 est monté de façon concentrique à l'intérieur de la couronne 10b et il est fixé à une partie tournante telle qu'une roue du véhicule.

Un moteur de frein 22, à commande hydraulique, est fixé sur le disque 10a de la plaque support, entre deux premières extrémités adjacentes des segments 12 et 14. Ce moteur de frein 22 est muni de deux pistons 24 et 26 qui fonctionnent en opposition de façon à exercer une poussé sur l'extrémité correspondante de l'âme 12a, 14a de chacun des segments, lorsque le moteur de frein est actionné.

Un bloc d'ancrage 28, également fixé sur le disque 10a de la plaque support, est placé entre les deux autres extrémités adjacentes des segments 12 et 14, de telle sorte que les extrémités correspondantes des âmes 12a et 14a de ces segments soient normalement en appui contre ce bloc.

Un ressort de traction 30 est interposé entre les extrémités des âmes des segments entre lesquelles est placé le moteur de frein 22, à proximité immédiate de ce dernier, pour rapprocher ces extrémités l'une de l'autre lorsque le moteur n'est pas actionné. De façon comparable, le maintien des deux autres extrémités des segments 12 et 14 en appui contre le bloc d'ancrage 28 est réalisé au moyen d'un ressort de traction 32 interposé entre les extrémités correspondantes des âmes des segments, à proximité immédiate de ce bloc.

En supposant que le tambour de frein 20 tourne dans le sens de la flèche F sur la figure 1 lorsque le véhicule se déplace en marche avant, les segments 12 et 14 peuvent être distingués par le fait que le segment 12 prend appui sur le bloc d'ancrage 28 lorsqu'il est en contact de friction avec le tambour, alors que le segment 14 prend appui sur le piston 26 du moteur de frein 22 dans les mêmes conditions. Pour tenir compte de cette différence, les segments 12 et 14 sont appelés respectivement "segment comprimé" et "segment tendu".

Un levier de frein à main 34 est monté de façon pivotante par l'une de ses extrémités sur l'extrémité, par exemple, de l'âme du segment tendu 14 adjacente au moteur de frein 22, par l'intermédiaire d'un axe 36. L'axe géométrique de cet axe 36 est situé dans le même plan que l'axe du moteur de frein 22 et il est orienté selon une direction perpendiculaire à ce dernier axe. L'extrémité d'un câble de commande manuelle 38 est fixée à l'autre extrémité du levier de frein à main 34.

Le frein à tambour représenté sur la figure 1 comprend de plus une entretoise 40 disposée entre les segments 12 et 14, au voisinage du moteur de frein 22, approximativement parallèlement à l'axe de ce dernier.

L'entretoise 40 a une longueur variable et elle est équipée de moyens de réglage automatique permettant d'en accroître la longueur au fur et à mesure de l'usure des garnitures de friction 16 et 18. A cet effet, l'entretoise 40 comprend deux pièces terminales 40a et 40b dans lesquelles sont formées respectivement une échancrure recevant l'âme du segment 12 et une échancrure recevant l'âme du segment 14 et le levier de frein à main 34.

Des décrochements formés au niveau de l'entretoise 40 sur le bord intérieur de l'âme de chacun des segments 12 et 14 permettent de maintenir en place l'entretoise.

Les extrémités d'un ressort de traction 42 sont accrochées respectivement sur l'âme du segment tendu 14 et sur la pièce terminale 40b, de façon à assurer un contact permanent entre le levier de frein à main 34 et le fond de l'échancrure correspondante formée dans la pièce 40b. Ce ressort 42 applique ainsi indirectement une partie emboutie 34b du levier de frein à main contre le bord intérieur de l'âme du segment 14 supportant ce levier.

De façon comparable, le pièce 40a est sollicitée vers l'âme du segment 12 par un ressort de traction 44 dont les extrémités prennent appui respectivement sur l'âme du segment 12 et sur la pièce 40a.

L'entretoise 40 comprend une troisième pièce 40c, vissée sur la pièce 40a. La pièce 40a se prolonge du côté de la pièce 40b par une tige qui coulisse dans un trou formé dans l'extrémité adjacente de la pièce 40b.

Les moyens de réglage automatique associés à l'entretoise extensible 40 comprennent une roue dentée formée à la périphérie de la pièce intermédiaire 40c et sur laquelle est engrené un cliquet 40d formé à l'extrémité d'une lame élastique dont l'extrémité opposée est fixée sur la pièce 40b. Un organe (non représenté) fixé sur la pièce 40a de l'entretoise coopère avec la lame de ressort portant le cliquet 40d, de telle sorte qu'un écartement des pièces 40a et 40b de l'entretoise au-delà d'un jeu fonctionnel déterminé permet au cliquet 40d d'entraîner en rotation cette roue dentée dans le sens correspondant à un allongement de l'entretoise 40.

Lorsque la pression dans le moteur de frein 22 est relâchée, le ressort de traction 30 ramène les extrémités des segments adjacentes à ce moteur dans leur position de repos, l'écartement minimum entre ces extrémités étant défini par la longueur de l'entretoise 40 dans sa position entièrement vissée.

Conformément à l'invention, un dispositif est également prévu pour neutraliser les moyens de réglage automatique qui viennent d'être décrits, lorsque l'effort de freinage exercé sur les segments par le moteur de frein 22 excède un seuil prédéterminé.

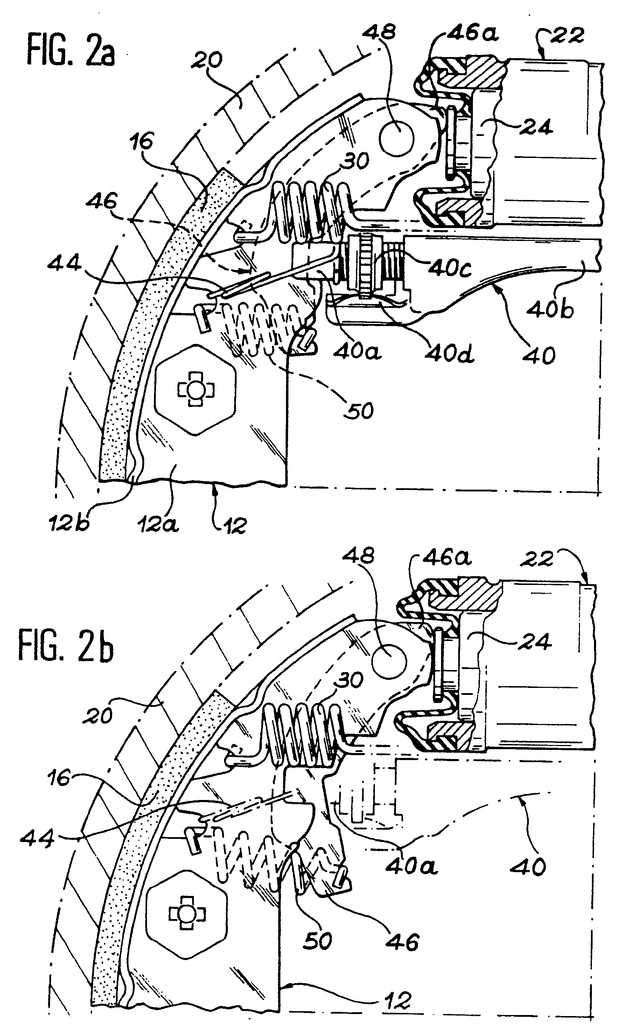

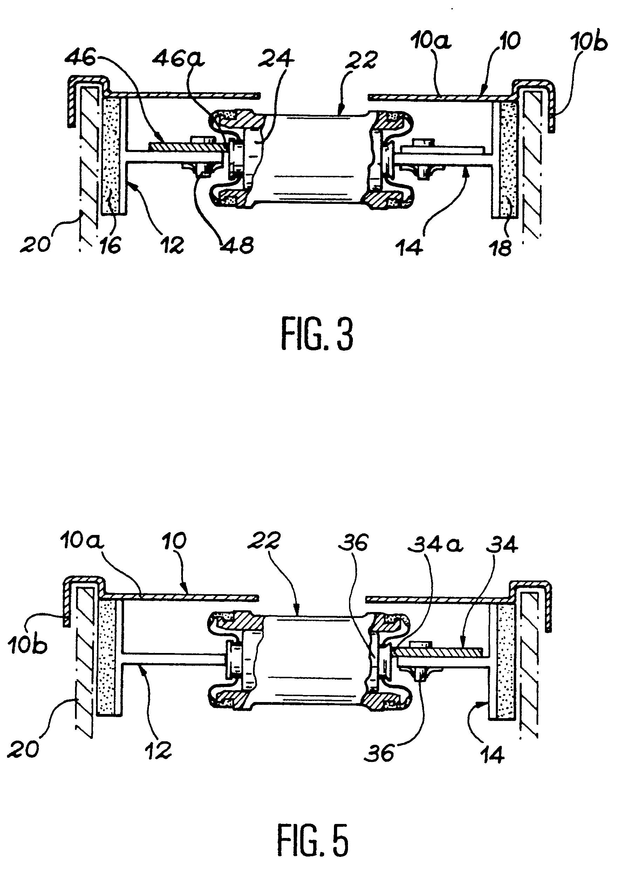

Un premier mode de réalisation de ces moyens de neutralisation, qui apparaît sur la moitié gauche de la figure 1, va maintenant être décrit plus en détail en se référant aux figures 2a, 2b et 3.

Dans ce premier mode de réalisation de l'invention, un levier 46 est monté pivotant par un axe 48 sur l'extrémité de l'âme 12a du segment avant adjacent au moteur de frein 22. L'axe géométrique de cet axe 48 est situé dans le même plan que l'axe du moteur de frein 22 et il est orienté perpendiculairement à cet axe.

Comme l'illustre la figure 2a, l'extrémité du levier 46 adjacente au moteur de frein 22 est terminée par une protubérance 46a située en totalité de l'autre côté du plan passant par les axes géométriques du moteur de frein 22 et de l'axe de pivotement 48, par rapport à l'entretoise 40. Un ressort de traction 50 interposé entre l'âme 12a du segment 12 et l'extrémité opposée du levier 46 tend à faire tourner ce dernier dans le sens des aiguilles d'une montre en considérant la figure 2a, ce qui a pour effet de maintenir normalement le levier 46 dans une position de repos déterminée par la venue en butée du levier 46 sur le segment 12. A cet effet, le levier 46 peut présenter une partie emboutie (non représentée) apte à venir en appui sur le bord intérieur de l'âme 12a du segment avant. Dans cette position de repos, la protubérance 46a fait saillie au-delà du bord d'extrémité de l'âme du segment 12 adjacent au moteur de frein 22. Le piston 24 est donc en appui sur la protubérance 46a et normalement espacé du bord d'extrémité de l'âme du segment 12.

Par ailleurs, dans la position de repos précédemment définie du levier 46, celui-ci est en contact avec le fond de l'échancrure formée dans la pièce 40a de l'entretoise 40, alors que l'âme 12a du segment 12 est espacée du fond de cette échancrure.

Dans l'agencement qui vient d'être décrit en se référant aux figures 2a et 3, et contrairement aux freins à tambour existants de ce type, il n'y a donc pas de contact direct entre le piston 24 du moteur de frein et l'âme du segment 12, ni entre l'entretoise 40 et l'âme du segment 12.

Lors d'un actionnement du moteur de frein 22, le levier 46 est soumis à deux forces antagonistes qui sont la force exercée par le ressort 50, tendant à faire tourner le levier dans le sens des aiguilles d'une montre en considérant la figure 2a, et la force exercée par le piston 24, qui tend à faire tourner le levier 46 en sens inverse.

Dans le cas représenté sur la figure 2a, qui correspond à un freinage normal, le moment de la force exercée par le piston 24 sur l'excroissance 46a du levier, autour de l'axe 48, est inférieur au moment de la force exercée par le ressort 50 sur l'extrémité opposée du levier, autour de l'axe 48. Par conséquent, le levier reste dans sa position de repos, c'est-à-dire qu'il ne pivote pas sur l'âme du segment 12. Dans ces conditions, le fonctionnement du dispositif de réglage automatique précédemment décrit n'est pas neutralisé, c'est-à-dire qu'un allongement de l'entretoise 40 intervient dès que l'écartement entre les extrémités des segments résultant de l'actionnement du moteur de frein 22 excède le jeu fonctionnel admis par ce dispositif.

Au contraire, la figure 2b illustre le cas d'un freinage puissant conduisant à appliquer sur les extrémités des segments adjacentes au moteur de frein une force excessive, conduisant dans un frein non équipé du dispositif de l'invention à un surréglage.

Lorsqu'on se trouve dans cette situation, le moment de la force exercée par le piston 24 sur l'excroissance 46a du levier excède le moment de la force exercée en sens inverse par le ressort 50 sur l'extrémité opposée du levier 46, autour de l'axe de pivotement 48 de ce dernier. Par conséquent, l'actionnement du moteur de frein 22 s'accompagne alors d'un pivotement du levier 46 autour de son axe 48 dans le sens inverse des aiguilles d'une montre en considérant la figure 2b. Etant donné que le levier 46 est en contact avec le fond de l'échancrure formée dans la pièce 40a de l'entretoise 40 sous l'action du ressort 44, il ne se produit alors aucun écartement notable entre les deux extrémités de l'entretoise, de sorte que le dispositif de réglage automatique est neutralisé. Un surréglage de ce dispositif est ainsi évité.

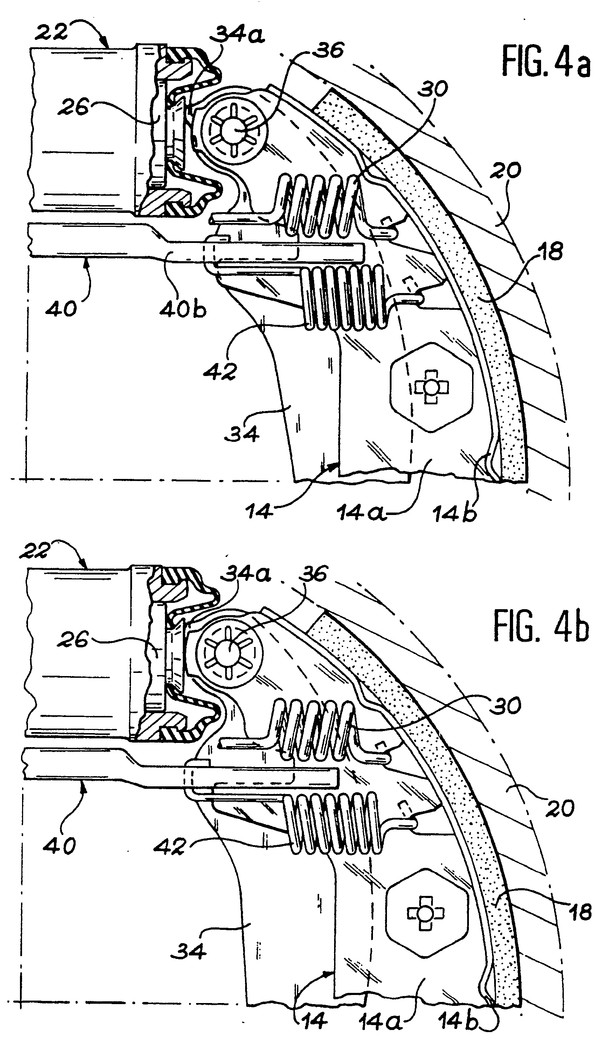

Dans le deuxième mode de réalisation de l'invention représenté sur la moitié droite de la figure 1 et illustré plus en détail sur les figures 4a, 4b et 5, au lieu d'avoir recours à un levier supplémentaire 46 que l'on monte sur l'âme du segment comprimé 12, on utilise le levier de frein à main 34 monté sur le segment tendu 14.

Plus précisément et comme l'illustrent mieux les figures 4a et 5, le levier de frein à main 34 comporte alors à son extrémité adjacente au moteur de frein 22 une protubérance 34a qui est située en totalité de l'autre côté du plan passant par les axes géométriques du moteur 22 et de l'axe de pivotement 36, par rapport à l'entretoise 40.

Lorsque le levier de frein à main 34 occupe sa position de repos, le ressort 42 applique le fond de l'échancrure formée à l'extrémité de la pièce 40b de l'entretoise contre le bord intérieur du levier de frein à main. La partie emboutie 34b (figure 1) du levier de frein à main est alors appliquée contre le bord intérieur de l'âme du segment 14. Dans ces conditions, la protubérance 34a fait saillie vers le piston 26 du moteur 22 au-delà du bord d'extrémité de l'âme du segment 14. Par conséquent, le piston 26 est en appui sur la protubérance 34a du levier de frein à main sous l'action du ressort 30 lorsque le moteur de frein est relâché, alors que le bord d'extrémité de l'âme du segment 14 est écarté du piston 26.

Comme le levier 46 dans le premier mode de réalisation, le levier de frein à main 34 est donc soumis lors de l'actionnement du moteur de frein 22 à deux forces antagonistes tendant à le faire tourner en sens opposé autour de son axe 36. Plus précisément, alors que la force exercée indirectement sur le levier 34 par le ressort 42, au travers de l'entretoise 40, tend à faire tourner le levier de frein à main dans le sens inverse des aiguilles d'une montre autour de son axe 36, la force exercée sur la protubérance 34a du levier de frein à main par le piston 26 du moteur de frein 22 tend à faire tourner ce levier en sens inverse.

La figure 4a montre que, dans le cas d'un actionnement normal du frein, le moment de la force exercée par le piston 26 du moteur de frein sur la protubérance 34a du levier de frein à main autour de son axe 36 est inférieur au moment de la force exercée sur ce levier par le ressort 42 autour du même axe 36. Dans ces conditions, le levier de frein à main 34 reste dans sa position de repos définie précédemment, c'est-à-dire qu'il ne pivote pas autour de son axe 36. Par conséquent, lorsque l'actionnement du frein conduit à écarter les extrémités des segments adjacents au moteur de frein 22 d'une valeur supérieure au jeu fonctionnel déterminé par le dispositif de réglage associé à l'entretoise 40, un réglage du frein conduisant à un accroissement de la longueur de cette entretoise est assuré.

Au contraire, dans le cas d'un freinage puissant illustré par la figure 4b, qui conduirait dans un frein non équipé du dispositif de l'invention à un surréglage, le moment de la force exercée par le piston 26 du moteur de frein sur la protubérance 34a du levier de frein à main, autour de l'axe 36 excède le moment exercé en sens opposé par le ressort 42. Par conséquent, l'actionnement du moteur de frein 22 s'accompagne alors d'un pivotement du levier de frein à main 34 dans le sens des aiguilles d'une montre en considérant la figure 4b. L'écartement entre le bord intérieur du levier de frein à main 34 qui est en appui dans le fond de l'échancrure formée dans la pièce 40b de l'entretoise 40 et le bord de l'âme du segment qui est en appui dans le fond de l'échancrure formée dans la pièce 40a de l'entretoise reste alors pratiquement inchangé. Par conséquent, aucun accroissement de la longueur de l'entretoise 40 ne se produit et le dispositif de réglage est neutralisé.

Bien entendu, l'invention n'est pas limitée aux modes de réalisation qui viennent d'être décrits à titre d'exemple mais en couvre toutes les variantes.

En particulier, le premier mode de réalisation décrit s'applique à un frein à tambour équipé ou non d'un levier de frein à main. Dans le second cas, le levier 46 peut être monté indifféremment sur l'un ou l'autre des segments. Par ailleurs, les deux modes de réalisation décrits peuvent être utilisés quelle que soit la nature du dispositif de réglage automatique permettant de commander l'allongement de l'entretoise.

## Revendications

1. Frein à tambour à réglage automatique, comportant une plaque support (10) sur laquelle sont montés coulissants deux segments de frein (12, 14) comprenant des éléments de friction (16, 18) susceptibles d'être amenés en contact avec un tambour tournant (20) par un moteur de frein (22) interposé entre deux extrémités adjacentes des segments, une entretoise (40) de longueur variable interposée entre les segments à proximité du moteur de frein, des moyens de réglage automatique (40c, 40d) commandant un allongement de l'entretoise lorsqu'un actionnement du moteur de frein écarte lesdites extrémités des segments d'une valeur supérieure à un jeu fonctionnel prédéterminé, des moyens de neutralisation, des moyens de réglage automatique, et des premiers moyens élastiques (30) tendant à appliquer les segments contre l'entretoise, un premier (12, 14) des segments portant par un axe de pivotement (48, 36) un levier (46, 34) sur lequel est normalement en appui le moteur de frein (22), caractérisé par le fait que l'entretoise (40) est normalement en appui sur le levier (46, 34) sous l'action des premiers moyens élastiques (30), des seconds moyens élastiques (50, 42) prenant appui sur le premier segment pour exercer sur le levier (46, 34) une force tendant à maintenir ce dernier en butée contre le premier segment, le moment de cette force par rapport à l'axe de pivotement (48, 36) du levier étant opposé au moment de la force exercée sur le levier par le moteur de frein (22), et déterminant une valeur limite de ce dernier moment, au-delà de laquelle un actionnement du moteur de frein provoque un pivotement du levier (46, 34) vers l'autre segment (14, 12), neutralisant les moyens de réglage automatique (40c, 40d).

2. Frein à tambour selon la revendication 1, caractérisé par le fait que l'axe de pivotement (48, 36) du levier (46, 34) sur le premier segment est situé dans un plan contenant l'axe du moteur de frein (22), ce dernier étant en appui sur une protubérance (48a, 36a) formée sur le levier et située de l'autre côté dudit plan, par rapport à l'entretoise (40).

3. Frein à tambour selon l'une quelconque des revendications 1 et 2, caractérisé par le fait que le moteur de frein (22) et les seconds moyens élastiques (50) sont en appui sur les extrémités opposées du levier (46), ce dernier étant articulé sur le premier segment (12) à proximité du moteur de frein (22).

4. Frein à tambour selon l'une quelconque des revendications 1 et 2, caractérisé par le fait que le levier pivotant est un levier de frein à main (34) articulé sur le premier segment (14) à proximité du moteur de frein (22), les seconds moyens élastiques (42) étant interposés entre l'entretoise (40) et le premier segment (14) pour maintenir en permanence l'entretoise en appui sur le levier de frein à main.

## Claims

1. Self-adjusting brake drum comprising a support plate (10) on which are slidably mounted two brake shoes (12, 14) carrying friction members (16, 18) adapted to be brought into contact with a rotating drum (20) by a brake motor (22) interposed between two adjacent ends of the shoes, a spacer (40) of variable length interposed between the shoes in the proximity of the brake motor, automatic adjustment means (40c, 40d) effecting the elongation of the spacer when the operation of the brake motor moves said ends of the shoes apart to an extent exceeding a predetermined operating clearance, means for neutralising the automatic adjustment means and first resilient means (30) urging the shoes against the spacer, a first shoe (12, 14) carrying by means of a pivot pin (48, 36) a lever (46, 34) against which the brake motor (22) normally bears, characterised by the fact that the spacer (40) normally bears on the lever (46, 34) through the action of said first resilient means (30), second resilient means (50, 42) bearing against the first shoe to apply to the lever (46, 34) a force tending to hold the latter in abutment against the first shoe, the moment of this force in relation to the pivot pin (48, 36) of the lever being opposite to the moment of the force exerted on the lever by the brake motor (22) and determining a limit value of said last-mentioned moment, beyond which value the operation of the brake motor effects the pivoting of the lever (46, 34) towards the other shoe (14, 12), thereby neutralising the automatic adjustment means (40c, 40d).

2. Drum brake according to Claim 1, characterised by the fact that the pivot axis (48, 36) of the lever (46, 34) on the first shoe is situated in a plane containing the axis of the brake motor (22), the latter bearing against a protuberance (48a, 36a) formed on the lever and situated on the other side of said plane, relative to the spacer (40).

3. Drum brake according to either of Claims 1 and 2, characterised by the fact that the brake motor (22) and the second resilient means (50) bear against the opposite ends of the lever (46), the latter being pivoted on the first shoe (12) in the proximity of the brake motor (22).

4. Drum brake according to either of Claims 1 and 2, characterised by the fact that the pivoting lever is a hand brake lever (34) pivoted on the first shoe (14) in the proximity of the brake motor (22), the second resilient means (42) being interposed between the spacer (40) and the first shoe (14) in order to hold the spacer permanently in abutment against the hand brake lever.

## Ansprüche

1. Trommelbremse mit automatischer Nachstellung, mit einer Trägerplatte (10), an der verschiebbar zwei Bremsbacken (12, 14) angebracht sind, die Reibungselemente (16, 18) aufweisen, die dazu geeignet sind, mittels eines zwischen zwei aneinandergrenzende Enden der Backen eingesetzten Bremsmotors (22) mit einer drehbaren Trommel (20) in Kontakt zu gelangen, einem Abstandsstück (40) mit variabler Länge, das zwischen die Bakken in der Nähe des Bremsmotors eingesetzt ist, Mitteln zur automatischen Nachstellung (40c, 40d), die eine Verlängerung des Abstandsstücks steuern, wenn eine Betätigung des Bremsmotors die Enden der Backen um einen Wert aufspreizt, der größer als ein vorgegebenes Arbeitsspiel ist, Neutralisationsmitteln, Mitteln zur automatischen Nachstellung und ersten elastischen Mitteln (30), die die Backen gegen das Abstandsstück vorspannen, wobei eine erste Backe an einer Schwenkachse (48, 36) einen Hebel (46, 34) trägt, auf dem sich normalerweise der Bremsmotor (22) abstützt, dadurch gekennzeichnet, daß sich das Abstandsstück (40) normalerweise unter der Wirkung der ersten elastischen Mittel (30) auf dem Hebel (46, 34) abstützt, wobei zweite elastische Mittel (50, 42), sich auf der ersten Backe abstützen, um auf den Hebel (46, 34) eine Kraft auszuüben, welche bestrebt ist, diesen letzteren gegen die erste Backe in Anschlag zu halten, und wobei das Drehmoment dieser Kraft in bezug auf die Schwenkachse (48, 36) des Hebels dem Drehmoment der mittels des Bremsmotors (22) auf den Hebel ausgeübten Kraft entgegengesetzt ist und einen Grenzwert dieses letzteren Drehmoments bestimmt, oberhalb dessen eine Betätigung des Bremsmotors eine Schwenkung des Hebels (46, 34) zur anderen Backe (14, 12) hervorruft, wodurch die Mittel zur automatischen Nachstellung (40c, 40d) neutralisiert werden.

2. Trommelbremse gemäß Anspruch 1, dadurch gekennzeichnet, daß die Schwenkachse (48, 36) des Hebels (46, 34) an der ersten Backe in einer Ebene angeordnet ist, die die Achse des Bremsmotors (22) enthält, wobei sich dieser letztere an einer Ausbauchung (48a, 36a) abstützt, die am Hebel ausgebildet und an der in bezug auf das Abstandsstück (40) gegenüberliegenden Seite der Ebene angeordnet ist.

3. Trommelbremse gemäß einem der Ansprüche 1 und 2, dadurch gekennzeichnet, daß sich der Bremsmotor (22) und die zweiten elastischen Mittel (50) an den gegenüberliegenden Enden des Hebels (46) abstützen, wobei dieser letztere in der Nähe des Bremsmotors (22) an der ersten Backe (12) angelenkt ist.

4. Trommelbremse gemäß einem der Ansprüche 1 und 2, dadurch gekennzeichnet, daß der Schwenkhebel ein Handbremshebel (34) ist, der in der Nähe des Bremsmotors (22) an der ersten Backe (14) angelenkt ist, wobei die zweiten elastischen Mittel (42) zwischen dem Abstandsstück (40) und der ersten Backe (14) eingesetzt sind, um das Abstandsstück ständig am Handbremshebel abzustützen.

EP 0 319 358 B1

FIG. 1

8

FIG. 2a

20

48

46a

22

16

24

46

30

44

40c

40b

40a

40d

40

50

12b    12a    12

FIG. 2b

48

46a

22

24

30

20

16

44

40a

40

50    46

12

FIG. 3

FIG. 5

FIG. 4a

FIG. 4b